# EUROPEAN PATENT APPLICATION

(11) **EP 3 725 490 A1**
(43) Date of publication of application: **21.10.2020**
(21) Application number: 19754137.8
(22) Date of filing: 15.02.2019
(51) Int. Cl.: B29C 45/36, B29C 33/76

(54) **MOLDING METHOD AND MOLDING DEVICE**

(30) Priority: 16.02.2018 JP 2018026485
(71) Applicant: MITSUBISHI HEAVY INDUSTRIES, LTD., Chiyoda-ku Tokyo 100-8332 (JP)
(72) Inventor: OZAKI, Ryota, Tokyo 100-8332 (JP); SHIMIZU, Masahiko, Tokyo 100-8332 (JP); MANO, Shoya, Tokyo 100-8332 (JP); IKEDA, Kosuke, Tokyo 100-8332 (JP)
(74) Representative: Henkel & Partner mbB
(86) International application number: PCT/JP2019/005567
(87) International publication number: WO 2019/160084

(57) **Abstract**

This molding method has: a first step for injecting a molten resin (16) to a cavity section (13) of a molding die (1); a second step for plunging, in a state wherein the resin (16) is uncured, a punching pin (2) toward the resin (16) in the cavity section (13), said punching pin having a hollow section (5) opened at an leading end (2a); and a third step for obtaining a -molded resin article by curing the resin (16).

## Description

### Technical Field

The present invention relates to a molding method and a molding device.

This application claims priority based on Japanese Patent Application No. 2018-026485 filed on February 16, 2018, the entire disclosure of which is incorporated herein.

### Background Art

A molded resin article is manufactured by, for example, injection molding. When the molded resin article has a through-hole, the through-hole is formed by a perforation pin provided in a mold. The molten resin introduced into the mold is split into two by the perforation pin and joins on a back surface side of the perforation pin. At the junction, since a resin temperature is slightly decreased, the two resin flows cannot be completely merged, and a weld line may be formed (see, for example, PTL 1). The weld line may cause a decrease in strength of the molded resin article. In addition, the appearance of the molded resin article may be impaired by the weld line.

In the mold used in the molding method disclosed in PTL 1, the perforation pin can be made to protrude with respect to a cavity by a driving device. In this molding method, after filling the cavity, into which the perforation pin is not protruded, with the molten resin, the perforation pin is protruded into the uncured molten resin to form a through-hole. According to this molding method, in a case where the cavity is filled with the molten resin, the flow of the resin is not hindered by the perforation pin, and accordingly, no weld lines are formed.

### Citation List

### Patent Literature

[PTL 1] Japanese Patent No. 2717896

### Summary of Invention

### Technical Problem

In a case of manufacturing a thick molded article by using a high-strength resin such as a super engineering plastic (PEEK, PPS, or PI) or a fiber-containing resin (a resin containing a carbon fiber, a glass fiber, or the like), pressing weight of the perforation pin when forming the through-hole in the resin increases, in the molding method disclosed in PTL 1. Therefore, it may be difficult to form a through-hole. In addition, the installation of the driving device may be difficult, since a large-sized driving device is required to drive the perforation pin.

An object of the invention is to provide a molding method and a molding device which can easily produce a molded resin article having a hole and by which a weld line is hardly generated.

### Solution to Problem

According to an aspect of the invention, there is provided a molding method including a first step of injecting a molten resin into a cavity of a mold, a second step of making a perforation pin having a hollow portion open at a leading end protrude toward the resin in the cavity, in a state where the resin is not cured, and a third step of obtaining a molded resin article having a hole by curing the resin and extracting the perforation pin.

According to the molding method, since the perforation pin having the hollow portion open at the leading end is used, the pressing weight when the perforation pin is pushed into the resin can be suppressed. Accordingly, it is easy to manufacture a molded resin article having a hole. In addition, since the pressing weight can be reduced, a small-sized driving mechanism with a low output can be used, so that a problem hardly occurs in the installation of the driving mechanism. Therefore, a molded resin article can be easily manufactured.

According to the molding method, the flow of the resin is hardly hindered by the perforation pin, and accordingly, a weld line is hardly formed.

In the second step, the perforation pin may penetrate the resin.

Therefore, a molded resin article having a through-hole can be easily manufactured.

The hollow portion may be a hole extending in a length direction of the perforation pin.

Therefore, the resin is easily introduced into the hollow portion, and the pressing weight when the perforation pin is pushed into the resin can be suppressed.

The molding method may further include, before the first step, a preliminary step of making the perforation pin protrude into the cavity, and in the second step, a protrusion length of the perforation pin can be made to be longer than a protrusion length of the perforation pin in the preliminary step.

According to the molding method, a movement distance of the perforation pin in the second step can be reduced, and the pressing weight in a case of pressing the perforation pin into the resin can be prevented. Accordingly, it is easy to manufacture a molded resin article having a hole. In addition, since the pressing weight can be reduced, a small-sized driving mechanism with a low output can be used, so that a problem hardly occurs in the installation of the driving mechanism. Therefore, a molded resin article can be easily manufactured.

According to the molding method, a weld line is difficult to be formed, since the protrusion length of the perforation pin in the first step is short.

According to another aspect of the invention, there is provided a molding device including a mold for injection molding, and a perforation pin having a hollow portion open at a leading end and capable of protruding into a cavity of the mold.

According to the molding device, since the perforation pin having the hollow portion open at the leading end is used, the pressing weight when the perforation pin is pushed into the resin can be suppressed. Accordingly, it is easy to manufacture a molded resin article having a hole. In addition, since the pressing weight can be reduced, a small-sized driving mechanism with a low output can be used, so that a problem hardly occurs in the installation of the driving mechanism. Therefore, a molded resin article can be easily manufactured.

According to the molding device, the flow of the resin is hardly hindered by the perforation pin, and accordingly, a weld line is hardly formed.

### Advantageous Effects of Invention

According to one aspect of the invention, a molded resin article having a hole can be easily manufactured, and a weld line is hardly generated.

### Brief Description of Drawings

Fig. 1 is a schematic view of a molding device used in a molding method according to a first embodiment.
Fig. 2A is a perspective view of a perforation pin used in the molding device shown in Fig. 1.
Fig. 2B is a plan view of the perforation pin used in the molding device shown in Fig. 1.
Fig. 3 is a schematic view showing a first step of the molding method according to the first embodiment.
Fig. 4 is a schematic view showing the second step of the molding method according to the first embodiment.
Fig. 5 is a schematic view showing a third step of the molding method according to the first embodiment.
Fig. 6 is a view showing a relationship between an inner diameter ratio of a perforation pin and a pressing weight.
Fig. 7 is a perspective view showing a modification of the perforation pin.
Fig. 8 is a schematic view of a molding device used in a molding method according to a second embodiment.
Fig. 9 is a schematic view showing a preliminary step of the molding method according to the second embodiment.
Fig. 10 is a schematic view showing a first step of the molding method according to the second embodiment.
Fig. 11 is a schematic view showing a second step of the molding method according to the second embodiment.
Fig. 12 is a schematic view of a molding device used in a molding method according to a third embodiment.
Fig. 13 is a schematic view showing a first step of the molding method according to the third embodiment.
Fig. 14 is a schematic view showing a second step of the molding method according to the third embodiment.
Fig. 15 is a schematic view showing a third step of the molding method according to the third embodiment. Description of Embodiments

Hereinafter, embodiments to which the invention is applied will be described in detail with reference to the drawings. The drawings used in the following description are for describing the configuration of the embodiments of the invention, and sizes, thicknesses, dimensions, and the like of each portion shown in the drawings may be different from dimensional relationships of the actual device.

### [First Embodiment] (Molding Device)

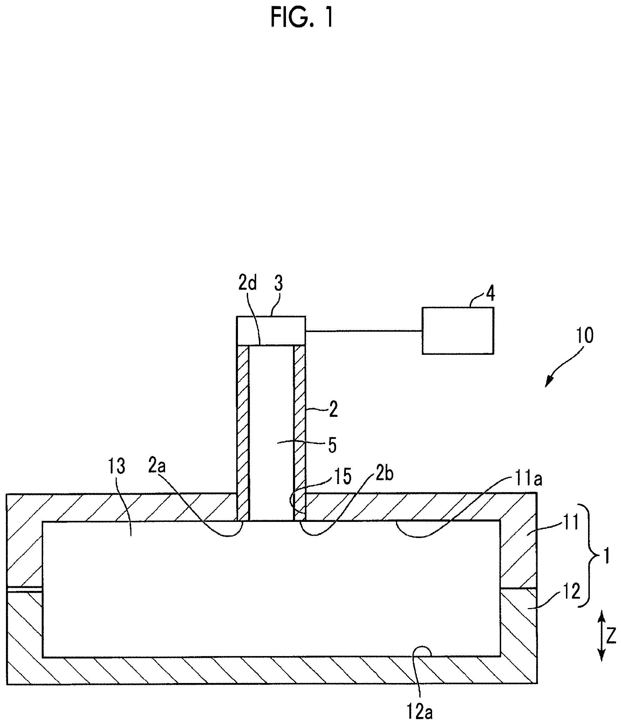

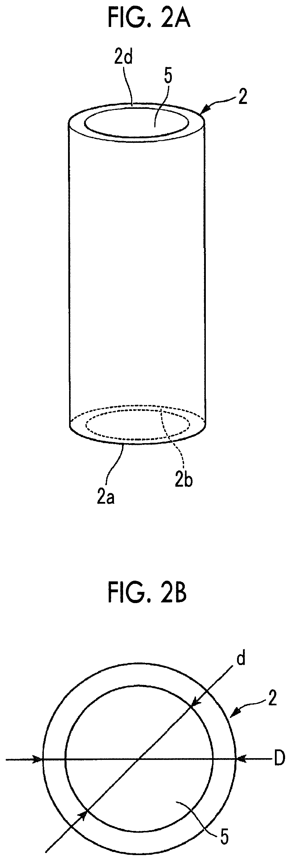

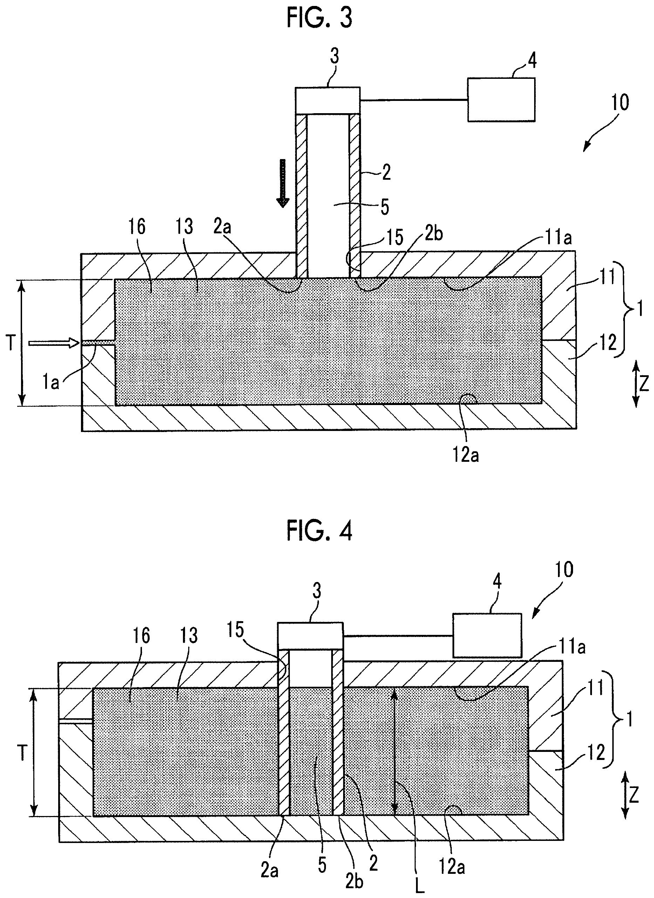

Fig. 1 is a schematic view of a molding device 10 (a manufacturing device of a molded resin article) used in a molding method (a manufacturing method of a molded resin article) according to a first embodiment. Fig. 2A is a perspective view of a perforation pin 2. Fig. 2B is a plan view of the perforation pin 2. Figs. 3 to 5 are schematic views showing each step of the molding method according to the first embodiment.

As shown in Fig. 1, the molding device 10 includes a mold 1, a perforation pin 2, a driving mechanism 3, and a control section 4.

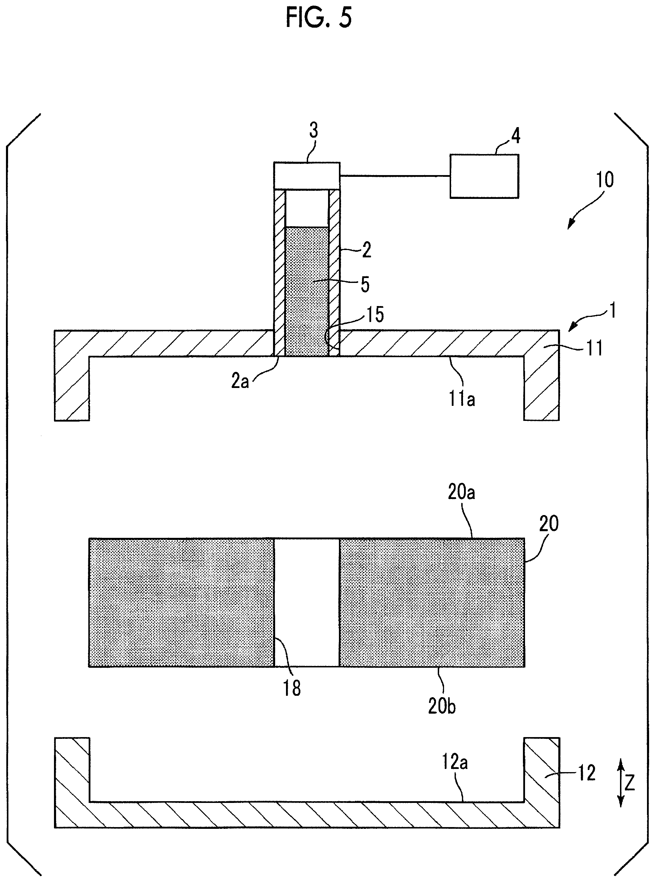

The mold 1 is a mold for injection molding and includes a first mold 11 and a second mold 12. A cavity 13 is provided between the first mold 11 and the second mold 12. The cavity 13 has a shape corresponding to the molded resin article 20 to be manufactured (see Fig. 5). An inner surface 11a of the first mold 11 and an inner surface 12a of the second mold 12 face each other with the cavity 13 interposed therebetween. A thickness direction of the cavity 13 (vertical direction in Fig. 1) is also referred to as a Z direction.

The first mold 11 has an insertion hole 15 through which the perforation pin 2 is inserted. The inner surface 11a of the first mold 11 faces the cavity 13. The inner surface 11a has a shape conforming to a first surface 20a of the molded resin article 20 (see Fig. 5). The inner surface 12a of the second mold 12 faces the cavity 13. The inner surface 12a has a shape conforming to a second surface 20b of the molded resin article 20 (see Fig. 5). The second surface 20b is a surface opposite to the first surface 20a of the molded resin article 20.

As shown in Figs. 2A and 2B, the perforation pin 2 (perforation member) has a hollow portion 5 open at a leading end 2a. The hollow portion 5 is a hole extending in a length direction of the perforation pin 2. Therefore, in the second step, the resin 16 is easily introduced into the hollow portion 5, and the pressing weight when the perforation pin 2 is pushed into the resin 16 can be suppressed.

It is desirable that the perforation pin 2 is also open at a base edge 2d (edge opposite to the leading end 2a). Accordingly, in the second step, when the resin 16 is introduced into the hollow portion 5, the air in the hollow portion 5 is easily discharged from the base edge 2d. Therefore, the pressing weight when the perforation pin 2 is pushed into the resin 16 can be reduced.

The perforation pin 2 may have a columnar shape having a central axis along the thickness direction (Z direction) of the cavity 13, for example, a cylindrical shape, a prismatic shape (a quadrangular prism shape, a triangular prism shape, or the like). The perforation pin 2 shown in Figs. 2A and 2B has a cylindrical shape. As shown in Fig. 2B, an inner diameter ratio (the ratio d/D of the inner diameter d to the outer diameter D) of the perforation pin 2 can be, for example, 0.5 to 0.8. Therefore, the pressing weight when the perforation pin 2 is pushed into the resin 16 can be suppressed, and a mechanical strength of the perforation pin 2 can be ensured. The perforation pin 2 can form a through-hole 18 (see Fig. 5) having a circular cross section orthogonal to the length direction.

As shown in Fig. 1, a length direction of the perforation pin 2 faces the thickness direction (vertical direction in Fig. 1) (Z direction) of the cavity 13. The perforation pin 2 is inserted through the insertion hole 15. The perforation pin 2 is configured such that a portion 2b including a leading end 2a can protrude with respect to the cavity 13 of the mold 1.

The perforation pin 2 is movable in the length direction (vertical direction in Fig. 1) (Z direction). Accordingly, the perforation pin 2 is configured to be able to protrude with respect to the cavity 13 of the mold 1. The perforation pin 2 can be arranged at a position (non-protruding position) where the perforation pin does not protrude from the inner surface 11a into the cavity 13 (see Fig. 1), or can be arranged at a position (protruding position) where the portion 2b including the leading end 2a protrudes from the inner surface 11a into the cavity 13 (see Fig. 4). At the most lowered position (most protruding position), the leading end 2a of the perforation pin 2 comes into contact with the inner surface 12a of the second mold 12 (see Fig. 4).

The driving mechanism 3 is, for example, a motor or the like, and can move the perforation pin 2 in a protruding direction (downward in Fig. 1) and in the opposite direction thereof.

The control section 4 can drive the driving mechanism 3 based on position information of the perforation pin 2 detected by a sensor (for example, an optical sensor) (not shown), and control a length of the perforation pin 2 in the protruding direction (the protrusion dimension from the inner surface 11a).

### [First Embodiment] (Molding Method)

Next, a molding method according to the first embodiment will be described with reference to Figs. 3 to 5.

### (First Step)

As shown in Fig. 3, the molten resin 16 is introduced (injected) into the cavity 13 of the mold 1 from the resin introduction hole 1a. An introduction direction of the resin 16 is, for example, a direction that intersects the Z direction (protruding direction of the perforation pin 2). For example, the introduction direction of the resin 16 is a direction orthogonal to the Z direction. The cavity 13 is filled with the resin 16.

As the resin 16, a thermoplastic resin is preferable. Examples of the thermoplastic resin include polyetheretherketone (PEEK), polyphenylenesulfide (PPS), polyimide (PI), polyethersulfone (PES), aromatic polyamide (PA), and polyamideimide (PAI). The resin 16 may be a fiber reinforcing resin. As the fiber reinforcing resin, for example, a carbon fiber reinforcing resin, a glass fiber reinforcing resin, or the like can be used. A tensile strength (for example, based on ASTM D638) of the molded resin article made of the resin 16 is, for example, 90 MPa or more (for example, 90 MPa to 262 MPa).

### (Second Step)

As shown in Fig. 4, in a state where the resin 16 is not cured, the driving mechanism 3 is operated by the control section 4 to protrude the perforation pin 2 toward the resin in the cavity 13. The perforation pin 2 is positioned at the most lowered position (most protruding position), and the leading end 2a comes into contact with the inner surface 12a of the second mold 12. Therefore, the perforation pin 2 penetrates the resin 16. The protrusion length L of the perforation pin 2 becomes equal to the total thickness T of the cavity 13. A part of the resin 16 is introduced into the hollow portion 5.

The protrusion length L of the perforation pin 2 is a dimension from the inner surface 11a of the first mold 11 to the leading end 2a of the perforation pin 2 in the Z direction (thickness direction of the cavity 13). The total thickness T is a dimension of the cavity 13 in a protruding direction of the perforation pin 2 (Z direction).

As described above, since the perforation pin 2 has the hollow portion 5 open at the leading end 2a, the area of a leading end surface of the perforation pin 2 is small. Therefore, the pressing weight when the perforation pin 2 is pushed into the resin 16 can be suppressed. Therefore, it is easy to form the through-hole 18 (see Fig. 5) by the perforation pin 2. In addition, since the pressing weight can be reduced, a small-sized driving mechanism 3 with a low output can be used. Therefore, a problem hardly occurs in the installation of the driving mechanism 3.

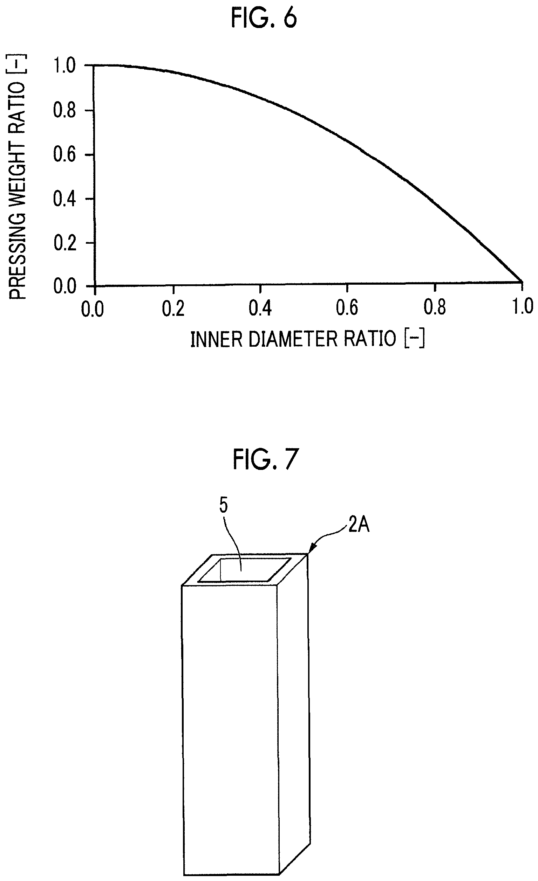

Fig. 6 is a view showing a relationship between an inner diameter ratio of the perforation pin 2 and the pressing weight. The "inner diameter ratio" is a ratio d/D between the inner diameter d and the outer diameter D of the perforation pin 2 shown in Fig. 2B. The "pressing weight ratio" is a ratio "W1/W2" of a pressing weight W1 of the perforation pin 2 in the second step and a pressing weight W2 in a case where a perforation pin having a solid structure is used instead of the perforation pin 2.

As shown in Fig. 6, as the inner diameter ratio of the perforation pin 2 increases, the pressing weight ratio decreases. Therefore, by using the perforation pin 2 having the hollow portion 5, the pressing weight of the perforation pin 2 in the second step can be reduced, compared to a case of using the perforation pin having a solid structure.

### (Third Step)

As shown in Fig. 5, the resin 16 (see Fig. 4) is cured by cooling or the like. The resin 16 may be cooled using a coolant such as water or air, or may be allowed to cool. The cured resin 16 becomes the molded resin article 20. The molded resin article 20 is taken out of the mold 1. The perforation pin 2 is extracted from the molded resin article 20. In the molded resin article 20, the portion where the perforation pin 2 was located becomes the through-hole 18.

According to the molding method of the first embodiment, since the perforation pin 2 having the hollow portion 5 open at the leading end 2a is used, the pressing weight when the perforation pin 2 is pushed into the resin 16 can be suppressed. Therefore, it is easy to manufacture the molded resin article 20 having the through-holes 18 (see Fig. 5). In addition, since the pressing weight can be reduced, a small-sized driving mechanism 3 with a low output can be used, so that a problem hardly occurs in the installation of the driving mechanism 3. Thus, the molded resin article 20 can be easily manufactured.

According to the molding method of the first embodiment, the flow of the resin 16 is hindered by the perforation pin 2, and accordingly, a weld line is hardly formed.

In the molding method of the first embodiment, the perforation pin 2 penetrates the resin 16 in the second step, so that the molded resin article 20 having the through-hole 18 can be easily manufactured.

Since the molding device 10 includes the perforation pin 2 having the hollow portion 5 open at the leading end 2a is used, the pressing weight when the perforation pin 2 is pushed into the resin 16 can be suppressed. Therefore, it is easy to manufacture the molded resin article 20 having the through-holes 18 (see Fig. 5). In addition, since the pressing weight can be reduced, a small-sized driving mechanism 3 with a low output can be used, so that a problem hardly occurs in the installation of the driving mechanism 3. Thus, the molded resin article 20 can be easily manufactured.

According to the molding device 10, in a case where the molding method of the first embodiment is used, the flow of the resin 16 is hindered by the perforation pin 2, and accordingly, a weld line is hardly formed.

Fig. 7 is a perspective view showing a perforation pin 2A which is a modification of the perforation pin 2. The perforation pin 2A has a square tubular shape (rectangular tubular shape). The perforation pin 2A can form a through-hole having a square cross section orthogonal to the length direction.

### [Second Embodiment] (Molding Method)

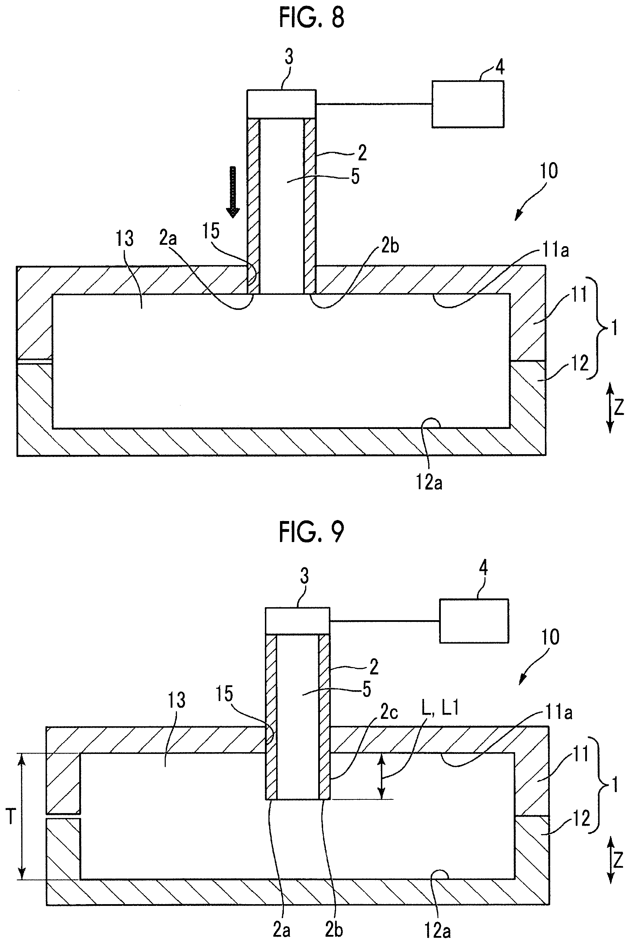

Next, a molding method according to the second embodiment will be described with reference to Figs. 8 to 10.

### (Preliminary Process)

In the molding device 10 shown in Fig. 8, the perforation pin 2 is at the non-protruding position.

As shown in Fig. 9, the driving mechanism 3 is operated by the control section 4, and the portion 2b including the leading end 2a of the perforation pin 2 is protruded into the cavity 13. The protrusion length L of the perforation pin 2 in this step is "L1". The protrusion length L1 of the perforation pin 2 is smaller than the total thickness T of the cavity 13. Therefore, the leading end 2a of the perforation pin 2 does not reach the inner surface 12a of the second mold 12.

It is desirable that the protrusion length L1 is 25% to 40% of the total thickness T. When the protrusion length L1 is 25% or more of the total thickness T, the pressing weight can be reduced when making the perforation pin 2 further protrude in this step which will be described later. When the protrusion length L1 is 40% or less of the total thickness T, formation of a weld line in the molded resin article 20 (see Fig. 5) can be prevented.

### (First Step)

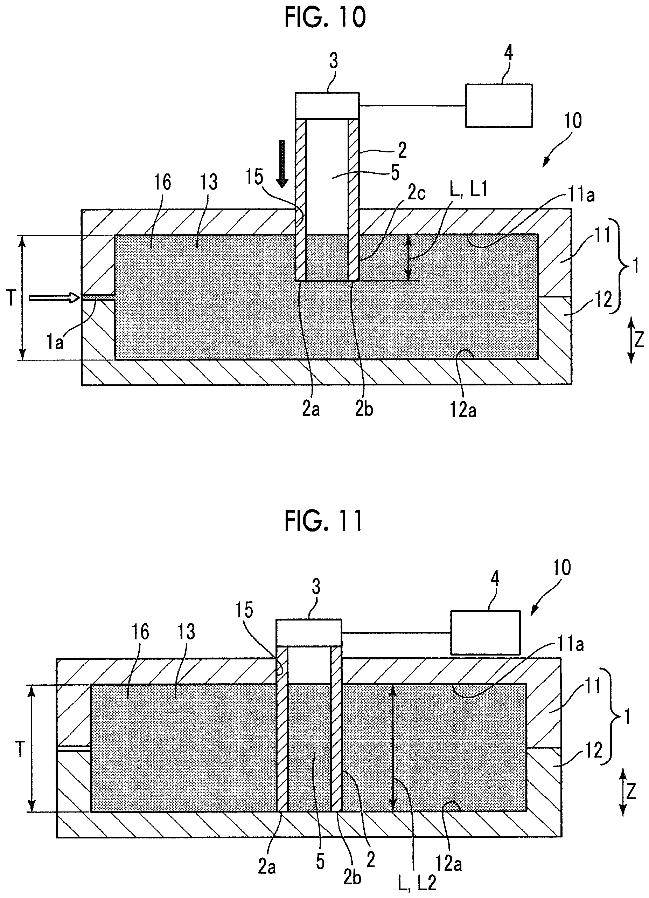

As shown in Fig. 10, the molten resin 16 is introduced (injected) into the cavity 13 of the mold 1 from the resin introduction hole 1a. An introduction direction of the resin 16 is, for example, a direction that intersects the Z direction (protruding direction of the perforation pin 2). For example, the introduction direction of the resin 16 is a direction orthogonal to the Z direction. The cavity 13 is filled with the resin 16.

The resin 16 that has reached the perforation pin 2 is divided into a plurality of directions, goes around the perforation pin 2 and joins. A joining angle in a case where a resin flow in a direction around one axis of the perforation pin 2 and a resin flow in a direction around the other axis of the perforation pin 2 joins on a side of a back surface 2c of the perforation pin 2 is referred to as a joining angle. The joining angle is an angle formed by the surfaces of the resin flows in two directions around the axes joining on the back surface 2c at the same height position as the inner surface 11a when seen from a direction parallel to the Z direction.

The resin 16 flows to include the protruding parts of the perforation pin 2, and is filled in the cavity 13. A part of the resin 16 is introduced into the hollow portion 5.

Since the protrusion length L1 of the perforation pin 2 is short, a weld line is not easily formed. The reason that the weld line is not easily formed can be assumed as follows. Since the protrusion length L1 of the perforation pin 2 is short, the resin 16 that has come into contact with the perforation pin 2 is not only easily divided in the direction around the axis of the perforation pin 2, but also in other directions (for example, direction going around the back surface 2c from the leading end side of the perforation pin 2). For this reason, the resin flows in many directions join on the back surface 2c of the perforation pin 2, and therefore, the joining angle is easily increased. If the joining angle is large, a weld line is hardly formed.

### (Second Step)

As shown in Fig. 11, in a state where the resin 16 is not cured, the driving mechanism 3 is operated by the control section 4 to further protrude the perforation pin 2. That is, the protrusion length L of the perforation pin 2 is set as a protrusion length L2 longer than the protrusion length L1 (see Fig. 10). The protrusion length L2 is equal to the total thickness T of the cavity 13. The perforation pin 2 is positioned at the most lowered position (most protruding position), and the leading end 2a comes into contact with the inner surface 12a of the second mold 12. Therefore, the perforation pin 2 penetrates the resin 16.

In this step, a movement distance of the perforation pin 2 to the most protruding position when making the perforation pin 2 protrude is smaller than a movement distance of the perforation pin 2 from the non-protruding position (see Fig. 8) to the most protruding position. Therefore, the pressing weight when the perforation pin 2 is pushed into the resin 16 can be suppressed. Therefore, it is easy to form the through-hole 18 (see Fig. 5) by the perforation pin 2. In addition, since the pressing weight can be reduced, a small-sized driving mechanism 3 with a low output can be used. Therefore, a problem hardly occurs in the installation of the driving mechanism 3.

### (Third Step)

The resin 16 is cured by cooling or the like. The cured resin 16 becomes the molded resin article 20 (see Fig. 5). The molded resin article 20 is taken out of the mold 1. The perforation pin 2 is extracted from the molded resin article 20. In the molded resin article 20, the portion where the perforation pin 2 was located becomes the through-hole 18.

According to the molding method of the second embodiment, since the perforation pin 2 having the hollow portion 5 open at the leading end 2a is used, the pressing weight when the perforation pin 2 is pushed into the resin 16 can be suppressed, in the same manner as in the molding method of the first embodiment. Thus, the molded resin article 20 can be easily manufactured.

According to the molding method of the second embodiment, the cavity 13 is filled with the resin 16 in a state where the perforation pin 2 is protruded (see Fig. 10) in the first step, and the perforation pin 2 is further protruded in the second step (see Fig. 11). Accordingly, the movement distance of the perforation pin 2 in the second step can be reduced, and the pressing weight when the perforation pin 2 is pushed into the resin 16 can be suppressed. Therefore, it is easy to manufacture the molded resin article 20 having the through-holes 18 (see Fig. 5). In addition, since the pressing weight can be reduced, a small-sized driving mechanism 3 with a low output can be used, so that a problem hardly occurs in the installation of the driving mechanism 3. Thus, the molded resin article 20 can be easily manufactured.

According to the molding method of the second embodiment, since the protrusion length L1 (see Fig. 10) of the perforation pin 2 in the first step is short, a weld line is not easily formed as described above.

In the molding method of the second embodiment, the perforation pin 2 penetrates the resin 16 in the second step, so that the molded resin article 20 having the through-hole 18 can be easily manufactured.

Since the molding device 10 includes the control section 4, the pressing weight of the perforation pin 2 is suppressed by making the perforation pin 2 protrude in two stages, and the molded resin article 20 is easily manufactured. The molding device 10 can set the protrusion length L1 of the perforation pin 2 in the first step to be short by the control section 4, so that the weld line can be prevented.

### [Third Embodiment] (Molding Device)

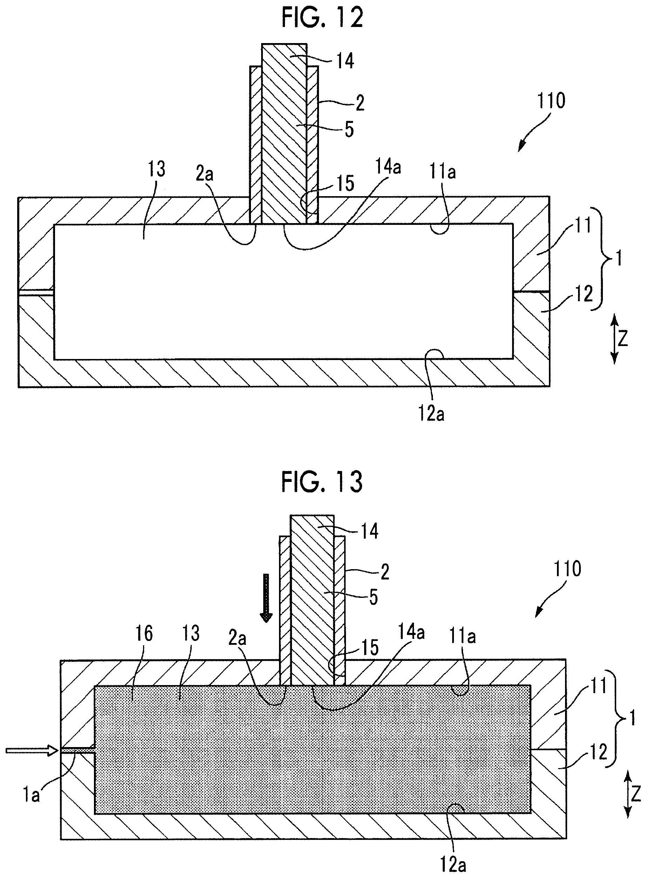

Fig. 12 is a schematic view of a molding device 110 used in a molding method according to a third embodiment. Figs. 13 to 15 are schematic views showing each step of the molding method according to the third embodiment.

As shown in Fig. 12, the molding device 110 has the same configuration as the molding device 10 (see Fig. 1) of the first embodiment, except that an insertion body 14 that is inserted into the perforation pin 2 is included. In the drawings subsequent to Fig. 12, the driving mechanism and the control section is omitted.

The insertion body 14 has a columnar shape, for example, a columnar shape, a prismatic shape (a quadrangular prism shape, a triangular prism shape, or the like) according to the shape of the hollow portion 5 of the perforation pin 2. The insertion body 14 has, for example, a cylindrical shape having an outer diameter almost equal to or slightly smaller than the inner diameter of the cylindrical perforation pin 2.

In Fig. 12, the perforation pin 2 is at the non-protruding position, and the insertion body 14 is inserted through the entire length. The height position (Z direction position) of the leading end 14a of the insertion body 14 is the same as the height position of the leading end 2a of the perforation pin 2.

### Third Embodiment (Molding Method)

Next, a molding method according to the third embodiment will be described with reference to Figs. 13 to 15.

### (First Step)

As shown in Fig. 13, the molten resin 16 is introduced (injected) into the cavity 13 of the mold 1.

### (Second Step)

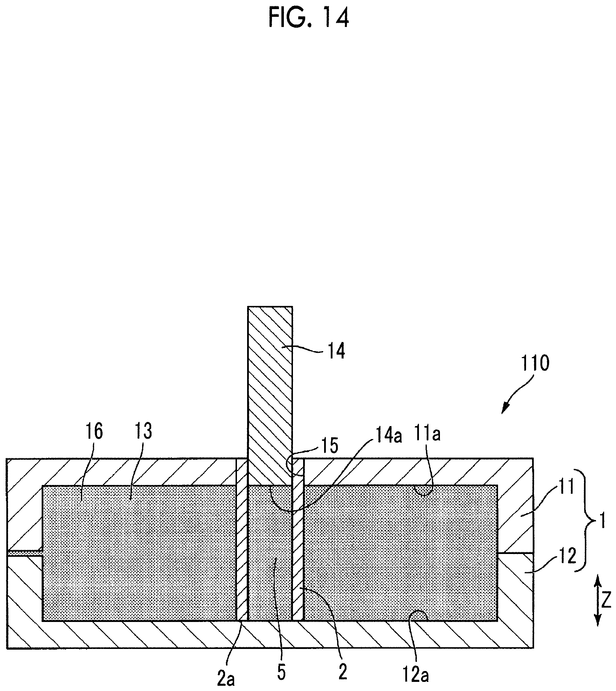

As shown in Fig. 14, in a state where the resin 16 is not cured, the perforation pin 2 is protruded toward the resin 16 in the cavity 13. At this time, since the insertion body 14 does not move, the perforation pin 2 is pushed into the resin 16 without the insertion body 14.

The perforation pin 2 is positioned at the most protruding position, and the leading end 2a comes into contact with the inner surface 12a of the second mold 12. A part of the resin 16 is introduced into the hollow portion 5.

### (Third Step)

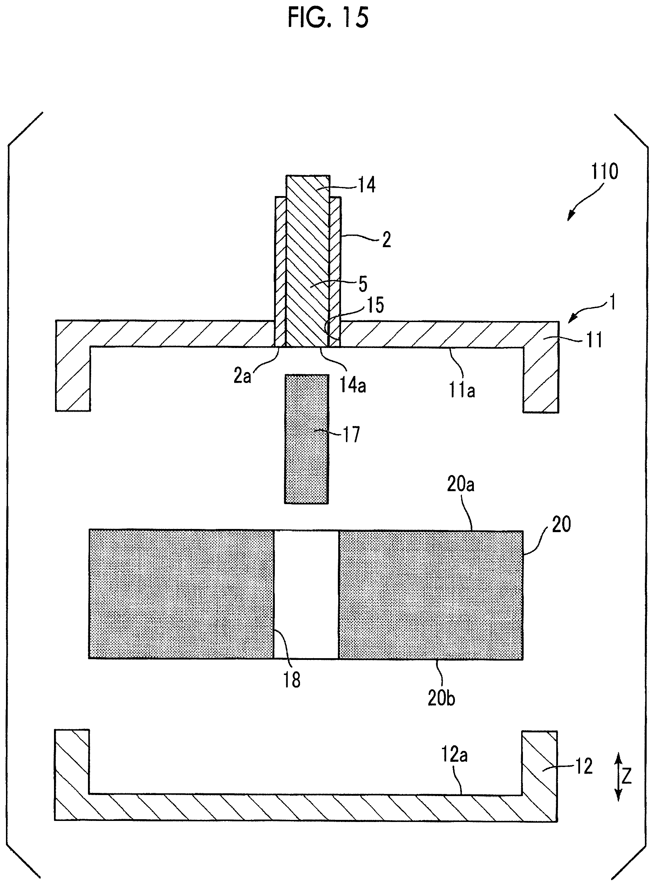

As shown in Fig. 15, the resin 16 (see Fig. 14) is cured by cooling or the like. The cured resin 16 becomes the molded resin article 20. The molded resin article 20 is taken out of the mold 1. The perforation pin 2 is extracted from the molded resin article 20. In the molded resin article 20, the portion where the perforation pin 2 was located becomes the through-hole 18.

The perforation pin 2 returns to the non-protruding position, and is in a state where the insertion body 14 is inserted again. Therefore, the resin 17 that was in the hollow portion 5 is discharged from the perforation pin 2.

According to the molding method of the third embodiment, since the perforation pin 2 having the hollow portion 5 open at the leading end 2a is used, the pressing weight when the perforation pin 2 is pushed into the resin 16 can be suppressed. Therefore, the molded resin article 20 having the through-hole 18 can be easily manufactured.

According to the molding method of the third embodiment, the flow of the resin 16 is hindered by the perforation pin 2, and accordingly, a weld line is hardly formed.

In the molding method of the third embodiment, since the insertion body 14 that can be inserted through the perforation pin 2 is provided, the resin 17 does not remain in the hollow portion 5 of the perforation pin 2 after the molded resin article 20 is molded. Therefore, the maintenance of the molding device 110 is easily performed.

Hereinabove, the preferred embodiments of the invention have been described in detail, but the invention is not limited to such specific embodiments, and various modifications or changes may be made within the gist of the invention described in the appended claims.

For example, in the molding method of the second embodiment, the perforation pin is protruded in two stages, but the number of stages in which the perforation pin is protruded may be any number of three or more.

The hole formed in the molded resin article is not particularly limited, and is preferably a through-hole.

The number of perforation pins used in the molding methods of the first to third embodiment is 1, but the number of perforation pins used in resin molding may be any number of 2 or more. In addition, the number of holes formed in the molded resin article is not limited to one, and may be any number of 2 or more.

### Industrial Applicability

According to the molding method and the molding device described above, a molded resin article having a hole can be easily manufactured, and a weld line is hardly generated.

### Reference Signs List

- 1: mold
- 2, 2A: perforation pin
- 2a: leading end
- 5: hollow portion
- 10, 110: molding device
- 13: cavity
- 16: resin
- 18: through-hole (hole)
- 20: molded resin article

## Claims

1. A molding method comprising:
a first step of injecting a molten resin into a cavity of a mold;
a second step of making a perforation pin having a hollow portion open at a leading end protrude toward the resin in the cavity, in a state where the resin is not cured; and
a third step of obtaining a molded resin article having a hole by curing the resin and extracting the perforation pin.

2. The molding method according to claim 1, wherein, in the second step, the perforation pin penetrates the resin.

3. The molding method according to claim 1 or 2, wherein, the hollow portion is a hole extending in a length direction of the perforation pin.

4. The molding method according to any one of claims 1 to 3, further comprising:
a preliminary step of making the perforation pin protrude into the cavity, before the first step,
wherein, in the second step, a protrusion length of the perforation pin is made to be longer than a protrusion length of the perforation pin in the preliminary step.

5. A molding device comprising:
a mold for injection molding; and
a perforation pin having a hollow portion open at a leading end and capable of protruding into a cavity of the mold.
